# EUROPEAN PATENT SPECIFICATION

(11) **EP 2 697 176 B1**
(45) Date of publication and mention of the grant of the patent: **07.12.2016**
(21) Application number: 12720661.3
(22) Date of filing: 16.04.2012
(51) Int. Cl.: C02F 11/12, F26B 17/02

(54) **METHOD FOR DRYING A PUMPABLE MIXTURE**
VERFAHREN ZUM TROCKNEN EINES PUMPFÄHIGEN GEMISCHES
PROCÉDÉ DE SÉCHAGE POUR SÉCHER UN MÉLANGE POMPABLE

(30) Priority: 14.04.2011 NL 2006610
(43) Date of publication of application: 19.02.2014
(73) Proprietor: Patent Plus B.V., 5761 CB Bakel (NL)
(72) Inventor: ROELOFS, Seine, NL-5761 CB Bakel (NL); ROELOFS, Willem Seine Christian, NL-5761 CB Bakel (NL)
(74) Representative: Verdijck, Gerardus
(86) International application number: PCT/NL2012/000027
(87) International publication number: WO 2012/144888

(56) References cited:
- WO-A1-2004/070299
- DE-C- 94 046
- FR-A- 1 429 885
- FR-A1- 2 922 882
- US-A- 1 774 922
- US-A- 1 813 133

## Description

The present invention relates to a method comprising a drying device suitable for drying a pumbable mixture. The drying device is more particularly suitable for drying manure and/or a digestate and/or an industrial effluent.

Diverse dryers are known in practice. Some of these dryers use horizontal transport of the mixture for drying, wherein dry air is blown over a mixture. Others of these known dryers use a substantially vertically provided conveyor belt or rollers with which the mixture is picked up, exposed to drying air and subsequently scraped from the belt or roller for further transport. WO 2004/070299 discloses such dryer.

Such dryers known in practice have a number of drawbacks, including the relatively large amount of energy required for the drying process and in addition the inability to cope with relatively great variations occurring in many of the mixtures for drying. Such variations, for instance in mixtures comprising manure, are inherent to the natural origin of the mixtures.

The present invention has for its object to provide an improved method with which the above stated problems can be wholly or partially resolved.

The present invention provides for this purpose a method for drying a pumpable mixture in accordance with claim 1.

The mixture for drying is for instance slurry or digestate. The mixture can for instance also be an industrial effluent.

Providing a supply holder in which the mixture can be held enables a quantity of the mixture for drying to be introduced into the supply holder. A batchwise or noncontinuous drying is hereby made possible in addition to a continuous drying. It is hereby possible to compensate for variations in the incoming mixture in relatively simple manner by returning the partially dried product to the supply holder. Only discharging the mixture after a fixed time period, and/or at a specifically obtained dry substance content of the mixture, achieves that incoming variations are reduced or wholly obviated.

According to the method of the invention, the carrier carries a part of the mixture out of the supply holder and exposes this entrained mixture to drying medium. The mixture is then returned to the supply holder.

By providing heating means in the supply holder the mixture can be heated in the drying device. Alternatively or additionally, heating means can be provided for the ingoing mixture, for instance by making use of a heat exchanger upstream of the inlet of the supply holder. Use can optionally be made here of an additional heating loop wherein mixture from the supply holder is pumped over a heat exchanger in order to be heated. Providing heating means has the surprising advantage that drying is improved by keeping warm and/or heating the mixture in the supply holder. This can be realized in that the energy necessary for the evaporation is available from the mixture and the energy in the drying air can likewise be utilized in effective manner. In the case of drying a manure the temperature of the mixture in the supply holder is perfectly held at a constant temperature of about 40-70°C. It has been found that the most effective and efficient drying of the mixture is realized at this temperature. Such a heating is for instance realized by arranging in the supply holder a spiral through which hot water can flow.

In a currently preferred embodiment of the method according to the invention the drying device is provided with a carrier embodied as a drivable endless carrier belt extending substantially in vertical direction. A lower outer end of such a carrier belt is preferably situated in the supply holder filled with the mixture. The carrier belt will hereby carry a part of the mixture upward, wherein the mixture is exposed to drying air as it is carried upward. The carrier belt is preferably provided for this purpose with links such that the mixture is entrained and carried upward.

According to the method of the present invention the drying device comprises energy supply system for supplying energy to the drying medium with a humidity of 5 to 10% and the heating means.

The drying medium, in particular drying air, is preheated by the energy supply system, energy preferably being supplied in the form of heat. Owing to this preheating more water is evaporated out of the mixture on the carrier. The energy supply system according to the invention preferably also supplies heat to the heating means in the supply holder. Heat is hereby supplied to the mixture present in the supply holder and not located on, at or in the carrier.

Surprisingly, it has been found that the additional supply of heat to the mixture in the supply holder results in a more effective drying. This is caused by the additionally supplied heat being wholly usable for the evaporation process.

The available energy, in particular available heat, is preferably distributed over the drying medium and the heating means by an energy distributor. If the available energy is available in the form of hot water from for instance a combined heat and power (CHP) unit, the available hot water can be distributed with a distributing valve over a heat exchanger intended for the purpose of heating the drying air and over the heating means in the supply holder. The distribution is preferably adapted to the process conditions, including for instance air temperature and air humidity. It has been found that supplying about 30-40% of the available energy to the heating means, and using 60-70% to heat the drying air results in the most effective drying during use. The available energy can originate here from a single process or from different sources.

The carrier, preferably embodied as the described carrier belt, or alternatively as a blade wheel in another embodiment, is also provided in a currently preferred embodiment with openings such that drying medium, in particular drying air, can be carried through these openings. The medium flows here substantially perpendicularly through the carrier, preferably the carrier belt. This has the result that the drying air moves in a direction substantially perpendicularly of the plane formed by the carrier/carrier belt. This means that the drying air is carried through the carrier (conveyor) belt, and thereby through the mixture, instead of being carried over the mixture. The contact between the mixture and the drying air is hereby greatly increased and drying can take place in more effective manner. The air transport is for instance realized by blowing and/or suctioning air through the carrier belt. An effective process for concentrating the mixture is in this way realized.

In the case it is applied to manure, the device according to the present invention brings about a preferably batchwise concentration of manure which is performed in an effective and efficient manner, wearing variations in the incoming moisture content or dry substance content are also compensated relatively easily.

In the method according to the present invention the drying device comprises ventilation means for realizing underpressure on the inner side of the carrier belt.

An effective drying is realized by providing ventilation means embodied such that air from the outer side of the carrier belt is carried to the inner side by realizing an underpressure. Relatively dry air from the area surrounding the drying device is hereby drawn in and carried through the mixture in the opening in the carrier belt, after which the relatively moist air is discharged. This further simplifies evaporation and limits energy consumption.

In an advantageous preferred embodiment according to the present invention the supply holder is provided with a first compartment for the mixture and a second compartment for the heating means.

Providing the heating means separately of the mixture achieves that the heating means remain clean. This has the result that the transfer of energy in the form of heat from the heating means to the mixture is not impeded by for instance encrusted mixture. This further results in cleaning of the heating means being relatively simple. In a currently preferred embodiment the supply holder is provided with two compartments one above the other separated by a floor or separating wall. The upper compartment contains the mixture and the lower compartment contains the heating means, preferably making use of hot water. An agitating element and/or a pump is preferably provided here in the lower compartment for the purpose of distributing the heat in this compartment and providing for the best possible heat transfer from the second compartment to the first compartment with the mixture.

In an advantageous preferred embodiment the carrier belt is connected at a first outer end to a drive roller, with a second outer end being provided loosely in the supply holder during use.

Owing to the use of drive rollers a carrier belt can be moved relative to the supply holder. In this embodiment the second outer end is provided loosely in the supply holder. This has the result that a separate travelling roller or drive roller need be provided at the bottom. It has been found that a controlled movement of the carrier belt through the mixture of the supply holder can hereby nevertheless be realized. Surprisingly, it has further been found that a quantity of mixture can in this way be carried along even more effectively by the carrier belt. An additional mixing also occurs in the supply holder, since the carrier belt does not move continuously through the mixture in the same manner. This additional mixing further enhances entraining of the mixture. This increases the effectiveness.

An additional advantage of providing a second outer end loosely in the supply holder is that fewer components are therefore necessary. This results in a simpler device at lower cost, with less maintenance and less cleaning since fewer components are hereby present in the mixture.

In an advantageous preferred embodiment according to the present invention more than one carrier belt is provided and the drive rollers can be driven groupwise by a drive.

Providing a plurality of carrier belts achieves that a carrier belt is suspended as a kind of loop in the device, wherein one outer end is driven and the other outer end is preferably suspended loosely in the supply holder. A number of loops of carrier belts placed adjacently of each other in the device are preferably driven by a single drive. This has the result that the number of drives can remain limited. In a possible embodiment about 10-20 carrier belts are provided in a supply holder with a running length of 3 to 6 metres. The option of driving a group of carrier belts is further improved in that it is possible to dispense with a scraper, since the drying device is preferably used for the concentrating process carried out in batchwise manner.

In a further advantageous preferred embodiment according to the present invention the drying device further comprises one or more sprayers for wetting the carrier belt.

Providing the device with one or more sprayers, which are preferably provided in the immediate vicinity of the side edges of the carrier belt, achieves that particularly the side edges of the carrier belt can be cleaned, preferably periodically. Caking on these side edges is hereby countered and the effective drying surface area is retained.

In a further advantageous preferred embodiment according to the present invention the drying device further comprises a belt dryer operatively connected to the supply holder.

By combining the drying device, having a substantially vertically moving carrier belt with which a concentrating process is carried out, with a horizontal belt dryer the mixture is further dried following the preferably batchwise concentration. A further drying can be realized in effective manner by applying such an additional belt dryer. This belt dryer is preferably positioned horizontally here, and the drying air is carried over the mixture. Such a horizontal belt dryer is per se known.

The combination of such a horizontally disposed belt dryer and the substantially vertically disposed concentrator makes it possible to provide further ventilation means for carrying drying medium over the drying belt and through the carrier belt. By first conditioning and carrying the same drying medium, for instance in the form of drying air, over the substantially horizontally disposed drying belt and subsequently guiding it through the carrier belt of the concentrator, preferably by suctioning as described above, the conditioned drying air is utilized in effective manner. The overall drying is hereby carried out more effectively.

In an application of the drying device according to the invention in the drying of manure, a mixture is carried into the supply holder for the concentrating process and there concentrated or dried to a dry substance content of preferably about 16% ds. The mixture is then transferred to the substantially horizontally disposed belt dryer and further dried to a dry substance percentage of about 70-90%. The mixture from the concentrating process can in this way still be transported in effective manner, for instance using a pump, to the belt dryer and, after the process on the belt dryer, can then be transferred, for instance with a pneumatic transport, for the purpose of further transport, processing or storage.

A distributor is preferably provided at the belt for the purpose of placing a so-called thin fraction on the belt. A larger amount of moisture can effectively be removed from the mixture in this way and a further drying realized. In a currently preferred embodiment such a distributor is embodied as a so-called disc distributor.

In the method according to the invention use is made of the distribution of available energy, in particular the distribution of available heat. This available energy or heat is in practice often available from other process steps or other processes, so that the drying can be performed in energy-efficient manner. In a first drying step a mixture is preferably also dried batchwise with the carrier belt. This first drying step does in fact come down to concentration of the mixture. The temperature of the mixture in the first drying step in the supply holder is preferably about 30-70°C, more preferably 35-50°C and most preferably about 40°C. This is realized by preferably providing heating means in the supply holder. The dry substance content of the mixture following the first drying step preferably amounts to about 8-16% and more preferably about 14%. The mixture can hereby still be pumped after the first drying step. Following the first drying step the mixture is preferably also further dried in a second drying step with a belt dryer. Following the second drying step the dry substance content of the mixture preferably amounts to about 70-90%.

In a currently preferred embodiment a pressing of the mixture is performed between the first and second drying steps. Such a pressing is for instance realized by using a screw press or a centrifuge in the transport conduit between the supply holder with the substantially vertically disposed carrier belt and the substantially horizontally disposed drying belt. The pressed part of the mixture, i.e. the part with the highest dry substance content, is preferably carried to the horizontal drying belt for the second drying step, and the wet part of the mixture is fed back to the supply holder in order to be further concentrated once again. Alternatively or additionally, a part of the mixture dried in the second drying step can be mixed, optionally with an additional mixer, with for instance digestate and/or the mixture dried in the first drying step, and subsequently fed back to the horizontal belt dryer. The supplied mixture is thus dealt with in effective manner in the above stated ways and residual flows are limited.

Further advantages, features and details of the invention are elucidated on the basis of preferred embodiments thereof, wherein reference is made to the accompanying drawings, in which:
- figure 1 shows a view of a treatment process making use of the device and method according to the invention;
- figure 2 shows a side view of the process of figure 1;
- figures 3, 4 and 5 show a view of the device for concentrating the mixture of figure 1; and
- figure 6 shows a schematic overview of the process according to the invention.

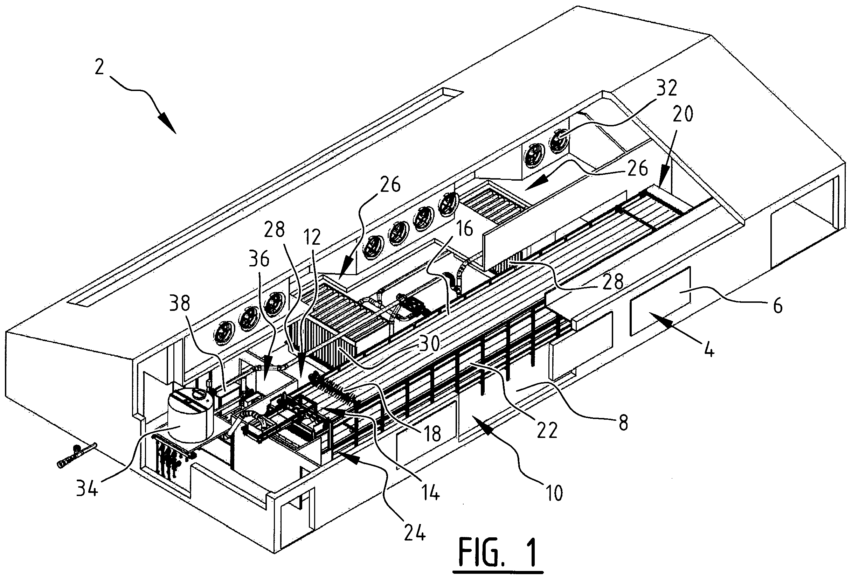

A farm building 2 (figure 1) is provided with an air inlet 4 at which heating elements 6 are provided. Situated downstream of inlet 4 is an air chamber 8, adjacently of which the horizontal belt dryer 10 is placed. Belt dryer 10 is provided at a first end 12 with an infeed 14 for feed of mixture onto a conveyor belt 16. Provided close to the belt 16 is an agitator 18 for partially agitating the mixture on belt 16. At second outer end 20 the mixture is carried back via a second belt 22 in the direction of first outer end 12, and subsequently further transported via discharge 24.

Situated on the other side of belt dryer 10 in the shown embodiment are two concentrators 26. Concentrators 26 comprise a supply holder 28 with a number of carrier belts 30 arranged as loops. A number of fans 32 are provided at the top of farm building 2. Farm building 2 is further provided with a buffer 34, a screw press 36 and a central control 38.

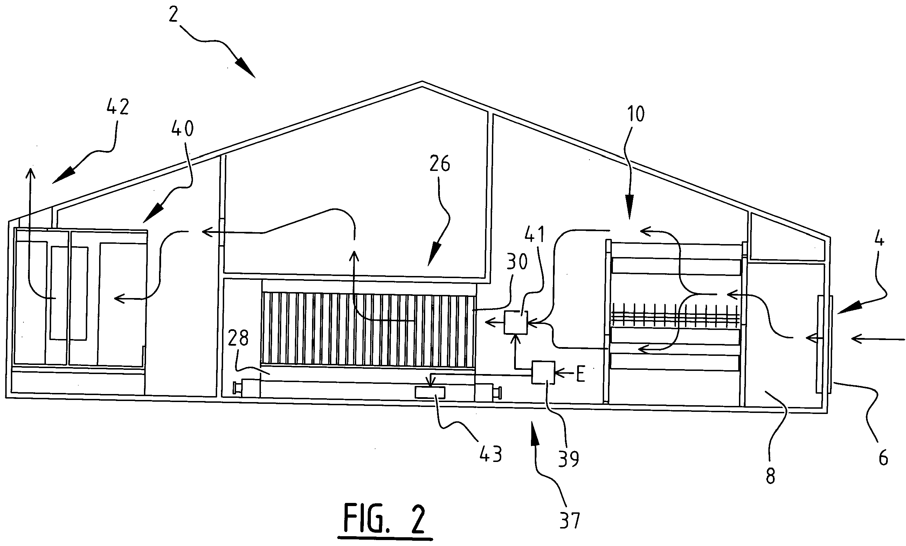

The air drawn in via inlet 4 (figure 2) passes through air chamber 8 over belt 16 and is then suctioned in by carrier belts 30. The extracted air is subsequently carried to air washer 40 and discharged via outlet 42 to the outside.

Energy E (figure 2) is carried via energy supply system 37 to distributor 39. A part of the energy is used in the shown embodiment in radiators 41 for heating the drying air. Another part of the energy is used for heating means 43 in supply holder 28 of concentrator 26.

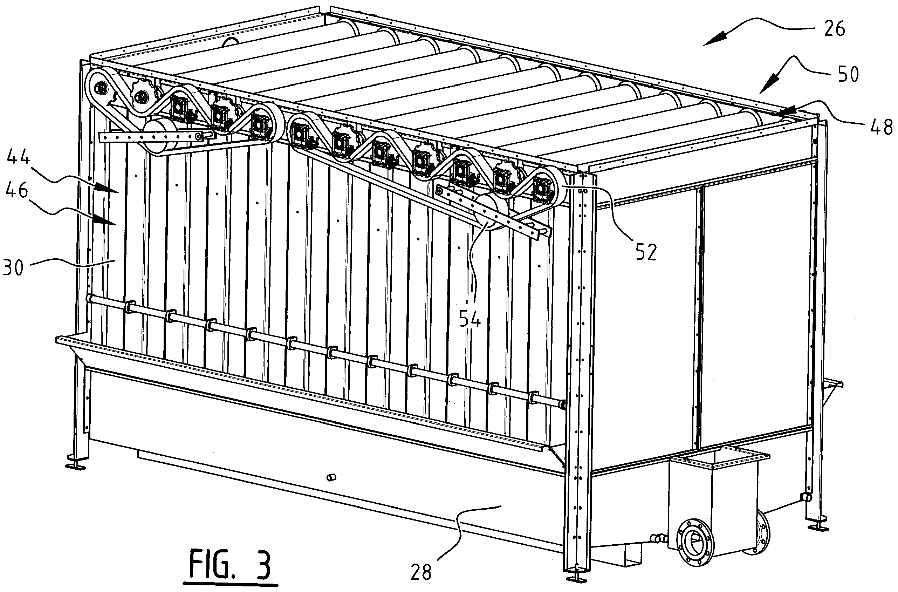

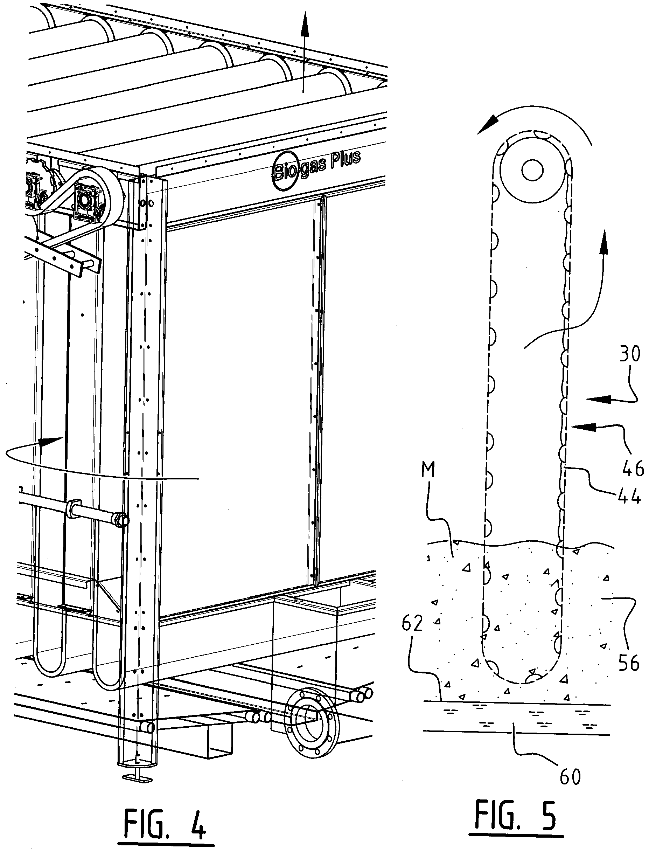

Concentrator 26 (figures 3, 4 and 5) is provided with links 44 which form carrier belt 30. Belt 30 is further provided with openings 46. Links 44 entrain mixture M from supply holder 28. The upper outer end 48 of belt 30 is driven with drive roller 50. A number of drive rollers 50 are mutually connected with cord, belt or chain 52 which is held at the desired tension with tensioning roller 54 for the purpose of groupwise driving of rollers 48.

The lower outer end 56 of belt 30 is situated as a free loop in mixture M during use. In the shown embodiment holder 28 is provided with a first compartment 58 for mixture M and a second compartment 60 for heating medium, for instance hot water. The water is heated for instance using a heating spiral through which hot water flows. A small agitating gear (not shown) is preferably provided in second compartment 60 for optimum mixing of hot water. Compartments 58, 60 are separated by separating floor 62.

In an experiment the drying device according to the invention in the form of a concentrator was compared to a conventional device in respect of drying performance and energy consumption.

Air preheated by radiators using hot water, usually of about 80 to 90°C, coming from cooling water of motors of CHP units and/or the exhaust gases of CHP units, or even normal warm outside air is blown into a conventional concentrator with vertical drying belts. In order to bring the water in the slurry in the concentrator from for instance 7% ds to for instance 14% ds, wherein 50% of the liquid (water) is therefore evaporated, a considerable quantity of warm dry air is necessary.

Use is made in the experiment of a CHP unit with an electrical power of 1,000 kW and hot water which, as a result of the cooling of the CHP unit and of the exhaust gases, likewise has a thermal power of about 1,000 kW (or 1,000 kWh/h). The hot water going to the radiator then has a heat content or heat capacity of 1,000 kWh/h. About 50,000 to 100,000 m³ of air per hour can hereby be brought to 70°C (in the summer at high outdoor temperatures about 100,000 m³ air/hour and in the winter at low outdoor temperatures about 50,000 m³ air/hour). In the present concentrator about 5 grams of water is evaporated per cubic metre of drying air passing through the concentrator with a humidity of 5-10%, wherein the outgoing drying air has a moisture content of 30-70%. With large quantities, and so at greater air speeds, and therefore short contact time with the digestate or the slurry on the drying belts of the concentrator, this is more like 30 to 40%; or, about 0.5 kg water is in practice evaporated per kWh heat. Under the most ideal conditions, at low airspeeds and so in the winter with relatively few cubic metres of air, a slightly higher evaporation can barely be realized.

It has further been found that following a period of concentration in the conventional concentrator the air humidity usually falls to 30% to 50% because the slurry or the digestate cools very quickly in the concentrator, in the case of digestate from for instance 40°C to 10°C. This is because heat is extracted from the medium (e.g. digestate) due to the evaporation.

It can be stated in conclusion that, if in a conventional concentrator an average of 0.6 litre to 0.7 litre water is evaporated per kWh heat with the concentrator alone, this is a reasonable result.

With the concentrator according to the invention the available heat is distributed over the radiators through which the air passes, which air is heated, and for the purpose of heating the digestate in the supply holder of the concentrator with the heating means.

Due to the heating of the digestate in the supply holder in the concentrator using heating spirals in the concentrator or in a tray with water under the supply holder of the concentrator the digestate remains at a constant temperature, for instance at about 25 to 40°C during the whole drying process. For instance 400 to 300 kWh/h thermal heat then goes to the concentrator and 600 to 700 kWh/h to the radiators (and so to the drying air).

The result is that in this way the air humidity of the air downstream of the concentrator is usually about 80% to 100% and that an evaporation of 1 litre of water per kWh heat is achievable. The overall evaporation efficiency of the concentrator according to the invention is hereby considerably better than the further comparable conventional concentrator.

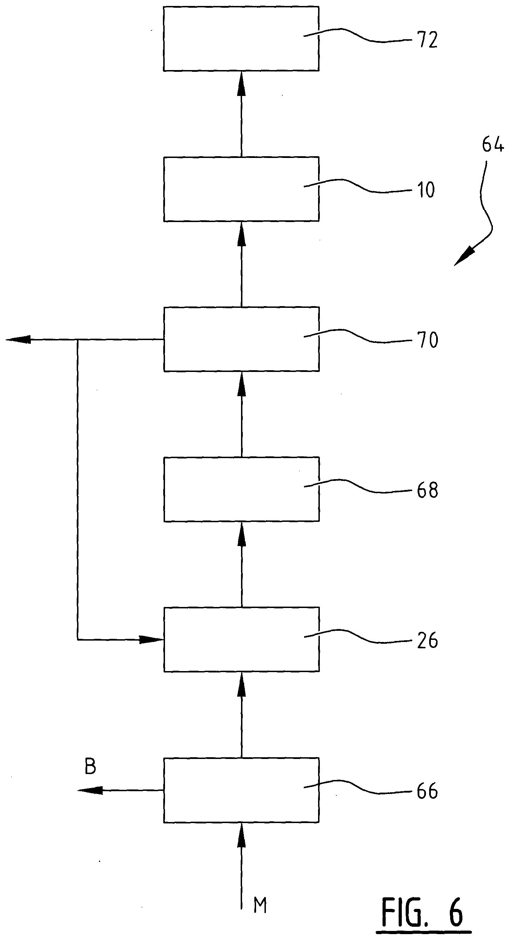

The installation 64 (figure 6) collects manure or mixture M in a fermenter 66 with which biogas B is generated. From fermenter 66 the manure M passes to two parallel placed concentrators 26 where concentration takes place to a percentage of about 14%. After about an hour of concentration the concentrated manure is carried to a reservoir 68. From reservoir 68 the concentrated manure goes to a screw press 70. The wet part is discharged from screw press 70 and/or guided back to one of the concentrators 26. The dry part goes from the screw press to the horizontal belt dryer 10 which further dries the manure in about 2½ hours to about 70-90%. The dried product is then transported pneumatically to a container 72. Time periods and percentages are (partially) adjustable.

The present invention is by no means limited to the above described embodiments thereof. The rights sought are defined by the following claims, within the scope of which many modifications can be envisaged.

## Claims

1. Method for drying a pumpable mixture, comprising of:
- providing a drying device (26) comprising:
- a supply holder (28) for holding the mixture;
- a drivable endless carrier (30) extending with an outer end into the supply holder during use, wherein drying medium flows during use through or along the mixture carried along by the carrier; and
- heating means (43) that are provided in the supply holder for heating the mixture in the supply holder and/or heating means are provided for heating the ingoing mixture into the supply holder, the drying device further comprising an energy supply system (37) for supplying energy to the drying medium and the heating means;
- supplying and discharging the mixture to and from the supply holder;
- realizing an under pressure on the inner side of the carrier with ventilation means;
- drying the mixture;
wherein the mixture is heated in the supply holder of the drying device with heating means (43), and wherein an energy supply system (37) supplies energy to drying medium with a humidity of 5 to 10% and the heating means; and
- distributing energy over the drying medium and the heating means with a distributor (39), wherein the temperature of the mixture in the supply holder is remained at a constant temperature at about 30 to 70°C, wherein the energy distributor (39) is configured for distributing 30 to 40% of the available energy to the heating means and 60 to 70% to heat the drying medium.

2. Method as claimed in claim 1, wherein in a first drying step the mixture is dried batchwise with the carrier (30), wherein the temperature of the mixture in the first drying step in the supply holder (28) is held at 35-50°C and most preferably at 40°C, and wherein in a preferably applied second drying step the mixture is further dried with a drying belt (22).

3. Method as claimed in claim 2, wherein a pressing of the mixture is performed between the first and second drying steps.

4. Method as claimed in claim 3, wherein a pressed part of the mixture is carried to the drying belt of the second drying step, and a wet part of the mixture is fed back to the supply holder.

5. Method as claimed in one or more of the foregoing claims, wherein the carrier is provided with openings (46) for passage of drying medium, wherein the medium flows substantially perpendicularly through the carrier.

6. Method as claimed in one or more of the foregoing claims, wherein the carrier belt comprises a substantially vertically extending carrier belt and wherein the carrier is connected at a first outer end (48) to a drive roller (50) and with a second outer end (56) is provided loosely in the supply holder during use, wherein preferably more than one carrier belt is provided, and wherein preferably the drive rollers can be driven groupwise by a drive (52).

7. Method as claimed in one or more of the foregoing claims, further comprising wetting the carrier with one or more sprayers.

## Patentansprüche

1. Verfahren zum Trocknen eines pumpfähigen Gemischs, aufweisend:
- Bereitstellen einer Trocknungsvorrichtung (26), die aufweist:
- eine Bestandsaufnahmevorrichtung (28) zum Aufnehmen der Mischung;
- einen antreibbaren endlosen Träger (30), der sich während der Verwendung mit einem äußeren Ende in die Bestandsaufnahmevorrichtung erstreckt, wobei während der Verwendung ein Trocknungsmedium durch oder entlang der Mischung strömt, die durch den Träger mitgeführt wird; und
- Heizeinrichtungen (43), die in der Bestandsaufnahmevorrichtung bereitgestellt sind, um die Mischung in der Bestandsaufnahmevorrichtung zu heizen, und/oder Heizeinrichtungen, die bereitgestellt sind, um die in die Bestandsaufnahmevorrichtung eingehende Mischung zu heizen, wobei die Trocknungsvorrichtung ferner ein Energieversorgungssystem (37) aufweist, um Energie an das Trocknungsmedium und die Heizeinrichtung zuzuführen;
- Zuführen der Mischung an die Bestandsaufnahmevorrichtung und Abgeben von dieser;
- Erzeugen eines Unterdrucks mit Lüftungsmitteln auf der Innenseite des Trägers;
- Trocknen der Mischung;
wobei die Mischung in der Bestandsaufnahmevorrichtung der Trocknungsvorrichtung mit Heizeinrichtungen (43) geheizt wird und wobei das Energieversorgungssystem (37) Energie an das Trocknungsmedium mit einer Feuchtigkeit von 5 bis 10% und die Heizeinrichtungen zuführt; und
- Verteilen von Energie über das Trocknungsmedium und die Heizeinrichtungen mit einem Verteiler (39), wobei die Temperatur der Mischung in der Bestandsaufnahmevorrichtung bei einer konstanten Temperatur von etwa 30 bis 70°C erhalten bleibt, wobei der Energieverteiler (39) aufgebaut ist, um 30 bis 40% der verfügbaren Energie an die Heizeinrichtungen und 60 bis 70% zum Heizen des Trocknungsmediums zu verteilen.

2. Verfahren nach Anspruch 1, wobei die Mischung in einem ersten Trocknungsschritt chargenweise mit dem Träger (30) getrocknet wird, wobei die Temperatur der Mischung in dem ersten Trocknungsschritt in der Bestandsaufnahmevorrichtung (28) auf 35 - 50°C und am bevorzugtesten auf 40°C gehalten wird, und wobei die Mischung in einem vorzugsweise angewendeten zweiten Trocknungsschritt weiter mit einem Trocknungsband (22) getrocknet wird.

3. Verfahren nach Anspruch 2, wobei zwischen den ersten und zweiten Trocknungsschritten ein Pressen der Mischung durchgeführt wird.

4. Verfahren nach Anspruch 3, wobei ein gepresster Teil der Mischung zu dem Trocknungsband des zweiten Trocknungsschritts befördert wird und ein nasser Teil der Mischung an die Bestandsaufnahmevorrichtung rückgeführt wird.

5. Verfahren nach einem oder mehreren der vorangehenden Ansprüche, wobei der Träger mit Öffnungen (46) für den Durchgang von Trocknungsmedium versehen ist, wobei das Medium im Wesentlichen senkrecht durch den Träger strömt.

6. Verfahren nach einem oder mehreren der vorangehenden Ansprüche, wobei das Trägerband ein sich im Wesentlichen vertikal erstreckendes Trägerband aufweist, und wobei der Träger an einem ersten äußeren Ende (48) mit einer Antriebsrolle (50) verbunden ist, und wobei ein zweites äußeres Ende (56) während der Verwendung lose in der Bestandsaufnahmevorrichtung bereitgestellt ist, wobei vorzugsweise mehr als ein Trägerband bereitgestellt ist, und wobei die Antriebsrollen von einem Antrieb (52) gruppenweise angetrieben werden können.

7. Verfahren nach einem oder mehreren der vorangehenden Ansprüche, das ferner das Benetzen des Trägers mit einer oder mehreren Sprüheinrichtungen aufweist.

## Revendications

1. Procédé pour sécher un mélange pompable, comprenant :
la fourniture d'un dispositif de séchage (26) comprenant:
- une cuve d'alimentation (28) destinée à contenir le mélange;
- un transporteur sans fin entraînable (30) s'étendant avec une extrémité extérieure dans la cuve d'alimentation durant l'utilisation, dans lequel un milieu de séchage s'écoule durant l'utilisation à travers ou le long du mélange transporté le long par le transporteur; et
- un moyen de chauffage (43) qui est disposé dans la cuve d'alimentation pour chauffer le mélange dans la cuve d'alimentation et/ou un moyen de chauffage est prévu pour chauffer le mélange entrant dans la cuve d'alimentation, le dispositif de séchage comprenant en outre un système d'alimentation énergie (37) pour alimenter en énergie le milieu de séchage et le moyen de chauffage;
l'apport et la décharge du mélange dans et depuis la cuve d'alimentation;
la réalisation d'une sous-pression sur un côté intérieur du transporteur à l'aide d'un moyen de ventilation;
le séchage du mélange;
dans lequel le mélange est chauffé dans la cuve d'alimentation du dispositif de séchage à l'aide d'un moyen de chauffage (43), et dans lequel un système d'alimentation en énergie (37) alimente en énergie le milieu de séchage avec une humidité de 5 à 10 % et le moyen de chauffage; et
la distribution d'énergie sur le milieu de séchage et
le moyen de chauffage à l'aide d'un distributeur (39), dans lequel la température du mélange dans la cuve d'alimentation reste à une température constante à environ 30 à 70 °C, dans lequel le distributeur d'énergie (39) est configuré pour distribuer 30 à 40 % de l'énergie disponible au moyen de chauffage et 60 à 70 % pour chauffer le milieu de séchage.

2. Procédé selon la revendication 1, dans lequel, lors d'une première étape de séchage, le mélange est séché de façon discontinue à l'aide du transporteur (30), dans lequel la température du mélange lors de la première étape de séchage dans la cuve d'alimentation (28) est maintenue à 35-50 °C et idéalement à 40 °C, et dans lequel, lors d'une deuxième étape de séchage préférablement appliquée, le mélange est encore séché à l'aide d'une courroie de séchage (22).

3. Procédé selon la revendication 2, dans lequel un pressage du mélange est effectué entre les première et deuxième étapes de séchage.

4. Procédé selon la revendication 3, dans lequel une partie pressée du mélange est réalisée sur la courroie de séchage de la deuxième étape de séchage, et une partie humide du mélange est renvoyée à la cuve d'alimentation.

5. Procédé selon une ou plusieurs des revendications précitées, dans lequel le transporteur est doté d'ouvertures (46) pour le passage de milieu de séchage, dans lequel le milieu s'écoule de manière sensiblement perpendiculaire à travers le transporteur.

6. Procédé selon une ou plusieurs des revendications précitées, dans lequel la courroie de transporteur comprend une courroie de transporteur s'étendant de manière sensiblement verticale et dans lequel le transporteur est connecté par une première extrémité extérieure (48) à un rouleau d'entraînement (50) et par une deuxième extrémité extérieure (56) est disposé librement dans la cuve d'alimentation durant l'utilisation, dans lequel de préférence pas plus d'une courroie de transporteur n'est prévue, et dans lequel de préférence les rouleaux d'entraînement peuvent être entraînés de façon groupée par un organe d'entraînement (52).

7. Procédé selon une ou plusieurs des revendications précédentes, comprenant en outre l'humidification du transporteur à l'aide d'un ou de plusieurs pulvérisateurs.
